# FASCICULE DE BREVET EUROPEEN

(11) **EP 0 893 470 B1**
(45) Date de publication et mention de la délivrance du brevet: **15.01.2003**
(21) Numéro de dépôt: 98202391.3
(22) Date de dépôt: 16.07.1998
(51) Int. Cl.: C08L 23/12, C08J 9/00, C08J 9/18

(54) **Composition à base de polymères du propylène pour granules expansés, procédé pour son obtention et utilisation**
Mischung auf der Basis von Propylenpolymeren für aufgeschäumte Teilchen, Verfahren zu ihrer Herstellung und ihre Verwendung
Blend based on Propylene Polymers for expanded granules, process for their preparation and their use

(30) Priorité: 24.07.1997 BE 9700642
(43) Date de publication de la demande: 27.01.1999
(73) Titulaire: POLYPROPYLENE BELGIUM (Naamloze Vennootschap), 2040 Antwerpen (BE)
(72) Inventeur: Delaite, Emmanuel, 7090 Braine-le-Comte (BE); Charlier, Jean, 1341 Ceroux-Mousty (BE); Bertozzi, Giuliano, 1082 Bruxelles (BE)
(74) Mandataire: Smith, Julian Philip Howard

(56) Documents cités:
- EP-A- 0 147 690
- EP-A- 0 359 517
- DE-A- 4 420 590

## Description

La présente invention concerne une composition à base de polymères du propylène, apte à être transformée en granules expansés. Elle concerne également un procédé pour obtenir une telle composition ainsi que son utilisation pour la fabrication de granules expansés. Elle concerne enfin des articles cellulaires façonnés à partir desdits granules.

Il est connu d'utiliser des polymères du propylène pour la fabrication d'articles cellulaires à partir de particules préexpansées. Le polypropylène est en effet préféré au polystyrène quand on souhaite conférer aux articles cellulaires une résistance chimique, une résistance à la chaleur et/ou un compromis résistance aux chocs/rigidité supérieur.

C'est ainsi que le document EP-A-0 071 981 mentionne en toute généralité l'utilisation de mélanges d'homopolymères du propylène et de copolymères éthylène/propylène pour la fabrication d'articles cellulaires résistant mieux à la déformation sous charge et aux chocs répétés que le polystyrène.

Le document EP-A-0 530 486 décrit la fabrication d'articles cellulaires, dont les propriétés mécaniques - notamment la résistance aux chocs - sont améliorées, à partir de mélanges particuliers constitués d'un copolymère à blocs d'éthylène et de propylène contenant une fraction élastomérique non cristalline et d'un copolymère statistique à base d'éthylène (0,5 à 6 % en poids) et de propylène (94 à 99,5% en poids) ou de 1-butène (0,5 à 12 % en poids) et de propylène (88 à 99,5 % en poids).

Le document DE-A-4420590 divulgue des particules de mousse de polyoléfine de densité uniforme obtenues à partir d'un mélange compatible d'au moins deux polymères du propylènè différents, ledit mélange étant constitué majoritairement de co- et terpolymères du propylène.

Un problème que ne résolvent pas de manière complètement satisfaisante les mélanges décrits ci-avant est l'obtention d'un compromis optimal entre les propriétés mécaniques et la cohésion des articles cellulaires fabriqués au départ de ces mélanges.

On a maintenant trouvé des compositions aptes à fournir des granules expansés présentant le compromis de propriétés recherché.

La présente invention concerne donc, à titre principal, une composition pour granules expansés comprenant, pour 100 parties en poids,
- de 60 à 90 parties en poids d'un homopolymère du propylène (A) ayant un indice de fluidité en fondu (MFI), mesuré selon la norme ASTM D 1238 (1986), sous une charge de 2,16 kg à 230°C et exprimé en g/10 min de 0,1 à 20, et
- de 40 à 10 parties en poids d'un copolymère statistique du propylène (B) contenant de 3 à 20 % molaire d'éthylène et/ou d'une α-oléfine ayant de 4 à 6 atomes de carbone dont le MFI est de 25 à 3000 g/10 min.

Les polymères (A) et (B) contenus dans la composition selon l'invention sont semi-cristallins au sens où on l'entend dans " Plastics Engineering "2nd edition, R.J. Crawford, Pergamon Press (1987), pages 3 et 4.

La quantité d'homopolymère (A) contenue dans la composition est de préférence d'au moins 65 parties en poids. Cette quantité est en outre le plus souvent d'au plus 85 parties en poids. Une teneur trop faible de la composition en homopolymère (A) nuit à la rigidité de l'article cellulaire final. Une teneur trop élevée de la composition en homopolymère (A) nuit à l'adhésion entre eux des granules expansés obtenus au départ de la composition ainsi qu'à la qualité de l'expansion.

La valeur du MFI de l'homopolymère (A) est de préférence au moins 1 g/10 min le plus souvent au moins 1,5 et plus particulièrement au moins 1,8 g/10 min. Elle ne dépasse le plus souvent pas 10 g/10 min, de préférence pas 5 g/10 min. Des valeurs ne dépassant pas 3,7 g/10 min conviennent bien.

L'homopolymère (A) entrant dans la composition selon l'invention est en général un polymère à chaînes essentiellement linéaires, c'est-à-dire exemptes de branchements latéraux. Par homopolymère (A), on entend des polymères dérivés uniquement du propylène. On entend également des copolymères du propylène contenant de faibles quantités de comonomère(s). En pratique la quantité maximale de comonomère(s) contenue dans l'homopolymère (A) ne devrait pas dépasser 1 % en poids, de préférence pas 0,7 % en poids. L'indice d'isotacticité (II) de l'homopolymère (A), mesuré par RMN¹³C, est d'au moins 93. De bons résultats sont obtenus avec des homopolymères (A) dont le II est d'au moins 95.

L'homopolymère (A) présente généralement un module d'élasticité en flexion (FlexMod) (mesuré, à 23°C, sur une éprouvette injectée d'une épaisseur de 4 mm, selon la norme ASTM D 790 M) de 1200 à 2450 MPa. De préférence, le FlexMod de l'homopolymère (A) est au moins 1300 MPa. Le plus souvent, ce FlexMod ne dépasse pas 2350 MPa.

La composition selon l'invention contient également, pour 100 parties en poids, de 40 à 10 parties en poids d'un copolymère statistique du propylène (B) contenant de 3 à 20 % molaire d'éthylène et/ou d'une α-oléfine ayant de 4 à 6 atomes de carbone.

La quantité de copolymère (B) contenue dans la composition est de préférence d'au plus 35 parties en poids. Cette quantité est en outre le plus souvent d'au moins 15 parties en poids. Une teneur trop faible de la composition en copolymère (B) nuit au thermoscellage entre eux des granules expansés obtenus au départ de la composition ainsi qu'à la qualité de l'expansion. Une teneur trop élevée de la composition en copolymère (B) nuit à la rigidité de l'article cellulaire final.

Le copolymère statistique (B) entrant dans la composition selon l'invention est choisi parmi les copolymères statistiques semi-cristallins du propylène contenant au moins un comonomère choisi parmi l'éthylène et les α-oléfines en C₄₋₆. Parmi ces dernières, le 1-butène est préféré.

La teneur en comonomères du copolymère statistique (B) est en général de 3 à 20 % molaires. A l'intérieur de ces fourchettes, la teneur optimale en comonomère dépend de sa nature.

Quoique des terpolymères contenant simultanément de l'éthylène et une α-oléfine en C₄₋₆ne soient nullement exclus du cadre de l'invention, les copolymères statistiques semi-cristallins du propylène (B) ne contenant, respectivement, que de l'éthylène ou du 1-butène, sont préférés.

La valeur du MFI du copolymère (B) est de 25 à 3000 g/10 min. Cette valeur est le plus souvent d'au moins 80 g/10 min, de préférence d'au moins 100 g/10 min et avantageusement au moins 120 g/10 min. Des valeurs d'au moins 130 g/10 min conviennent bien. Cette valeur est le plus souvent d'au plus 1000 g/10 min, de préférence d'au plus 300 g/10 min. On obtient de bons résultats lorsque le copolymère (B) a un MFI d'au plus 250 g/10 min et plus particulièrement d'au plus 200 g/10 min. Des valeurs de MFI du copolymère (B) trop basses sont préjudiciables au thermoscellage entre eux des granules expansés lors de la fabrication par moulage de l'article cellulaire final.

Le copolymère (B) entrant dans la composition selon l'invention présente le plus souvent un FlexMod de 400 à 1000 MPa. De préférence, le FlexMod du copolymère (B) est au moins 500 MPa. En particulier, ce FlexMod ne dépasse pas 850 MPa.

Des compositions préférées selon l'invention comprennent pour 100 parties en poids
- de 65 à 85 parties en poids d'un homopolymère du propylène (A) ayant un MFI de 1,5 à 5 g/10 min et un module d'élasticité en flexion de 1200 à 2450 MPa, et
- de 35 à 15 parties en poids d'un copolymère statistique du propylène (B) contenant de 3 à 20 % molaires d'éthylène et/ou d'une α-oléfine ayant de 4 à 6 atomes de carbone dont le MFI est de 80 à 300 g/10 min et le module d'élasticité en flexion est de 400 à 1000 MPa.

Deux types de compositions de ce type donnent de particulièrement bons résultats.

Les premières comprennent de 65 à 85 parties en poids d'un homopolymère du propylène (A) dont la valeur de MFI est 1,5 à 5 g/10 min et de 35 à 15 parties en poids d'un copolymère statistique (B) contenant de 10 à 20 % molaires de 1-butène et dont la valeur de MFI est 120 à 250 g/10 min. Cette teneur en butène est tout particulièrement d'au moins 12 % molaires. Elle est tout particulièrement d'au plus 18 % molaires.

Les secondes comprennent de 65 à 85 parties en poids d'un homopolymère du propylène (A) dont la valeur de MFI est 1,5 à 5 g/10 min et ayant un II d'au moins 97 et de 35 à 15 parties en poids d'un copolymère statistique (B) contenant de 3,5 à 12 % molaires d'éthylène et dont la valeur de MFI est 100 à 200 g/10 min. Cette teneur en éthylène est tout particulièrement d'au moins 4 % molaires. Elle est tout particulièrement d'au plus 10 % molaires de préférence d'au plus 8 % molaires.

Dans ce cas l'homopolymère (A) est plus particulièrement choisi parmi les polymères à haute rigidité dénommés couramment HIPP (high isotactic polypropylene) et dans lesquels on incorpore souvent un agent de nucléation conventionnel (talc, benzoate de soude, dérivés du sorbitol, etc.).

Les teneurs en comonomère mentionnées dans la présente description sont déterminées par spectrométrie IR à transformée de Fourier sur le polymère transformé en un film pressé de 200 µm. Ce sont les bandes d'absorption à 732 et 720 cm⁻¹ qui sont exploitées pour la détermination de la teneur en éthylène du copolymère au sens de la présente description. La bande d'absorption à 767 cm⁻¹ est exploitée pour apprécier la teneur en 1-butène.

Pour la fabrication de la composition selon l'invention, qui constitue un autre aspect de celle-ci, on procède au mélange de l'homopolymère (A) et du copolymère (B) entre eux. Ce mélange peut se faire selon n'importe quel procédé connu. Ce mélange peut s'effectuer par synthèse de l'homopolymère (A) suivie, dans le même milieu, ou dans un milieu différent dans lequel l'homopolymère (A) est introduit, de la synthèse du copolymère statistique (B). On peut aussi procéder au mélange mécanique des deux polymères préformés.

Dans le cas des synthèses successives le procédé d'obtention de la composition comprend deux étapes de polymérisation successives dans lesquelles sont préparées respectivement de 60 à 90 parties en poids d'un homopolymère du propylène (A) ayant un MFI de 0,1 à 20 g/10 min et de 40 à 10 parties en poids d'un copolymère statistique du propylène (B) contenant de 3 à 20 % molaires d'éthylène et/ou d'une α-oléfine ayant de 4 à 6 atomes de carbone dont le MFI est de 25 à 3000 g/10 min. Chacune des étapes de polymérisation dudit procédé peut être effectuée, selon des conditions générales bien connues de l'homme du métier, dans le même milieu de polymérisation ou dans des milieux de polymérisation différents. Généralement, on procède d'abord à la préparation de l'homopolymère (A) et ensuite à la préparation du copolymère (B) en présence de l'homopolymère (A) issu de la première étape. On peut effectuer ces étapes chacune, indépendamment l'une de l'autre, en suspension dans un diluant hydrocarboné inerte, dans le propylène maintenu à l'état liquide ou encore en phase gazeuse (en lit agité ou de préférence en lit fluidisé).

L'homopolymère (A) et le copolymère (B) entrant dans la composition obtenue selon l'invention peuvent être préparés en présence de tout système catalytique connu suffisamment productif et stéréospécifique, permettant de polymériser du propylène sous forme suffisamment isotactique et pouvant incorporer dans le polymère les quantités requises d'éthylène et/ou d'α-oléfine en C₄₋₆.

Ces systèmes catalytiques de même que les conditions générales de la synthèse de ces polymères sont bien connus de l'homme du métier.

Pour ce qui concerne le MFI de l'homopolymère (A) et du copolymère (B) formés, ils peuvent être réglés par l'addition d'un ou plusieurs agents de réglage connus de la masse moléculaire. L'hydrogène est le plus couramment utilisé. Sa concentration relative dans le milieu de préparation du copolymère (B) est généralement nettement plus importante que dans le milieu de préparation de l'homopolymère (A) compte tenu des MFI nettement plus élevés à conférer au premier.

Les quantités requises de monomère(s) et d'agent(s) de réglage de la masse moléculaire peuvent être introduites de manière continue ou discontinue dans le milieu de polymérisation.

Pour la fabrication de la composition selon l'invention, on peut aussi procéder au mélange mécanique de l'homopolymère (A) et du copolymère (B) entre eux. Selon cette variante, on prépare séparément l'homopolymère (A) et le copolymère (B) et on les mélange en fondu. Selon cette variante, on peut faire usage d'un précurseur du copolymère (B), obtenu dans des conditions de polymérisation conduisant à un MFI inférieur à celui du copolymère (B) contenu dans la composition selon l'invention. Le MFI du précurseur est alors généralement de 1 à 20 g/10 min, de préférence de 3 à 10 g/10 min. On peut amener ce MFI à la valeur nécessaire en le "dépolymérisant" ("visbreaking") de manière conventionnelle par mélange, sous un taux de cisaillement élevé, avec un peroxyde organique. On procède en général en mélangeant le précurseur du copolymère (B) et le peroxyde en fondu, à une température généralement comprise entre 130 et 350°C.

La durée du mélange dépend de la quantité de précurseur du copolymère (B) et de la quantité et de la nature du peroxyde mis en oeuvre, ainsi que du type de dispositif utilisé pour le mélange. Elle est généralement de 1 seconde à 1 heure.

La quantité de peroxyde organique mise en oeuvre doit être au moins suffisante pour provoquer une dépolymérisation du précurseur du copolymère (B), de manière à amener son MFI à la valeur souhaitée.

Pour effectuer le mélange, on peut utiliser tous les dispositifs, connus à cet effet, lui conférant un taux de cisaillement suffisant. Ainsi, on peut travailler indifféremment avec des malaxeurs de type externe ou interne. Les malaxeurs de type interne sont les plus appropriés et, parmi eux, les malaxeurs discontinus de type BRABENDER et les malaxeurs continus tels que les extrudeuses.

La composition selon l'invention peut contenir, outre les constituants essentiels mentionnés ci-dessus, des additifs conventionnels connus tels que des stabilisants, des pigments, des colorants, des matières de charge, des agents ignifugeants, des agents antistatiques, des lubrifiants, des agents favorisant le glissement, etc.

De préférence, la composition selon l'invention ne contient, à titre de polymères, que les polymères (A) et (B) définis plus haut.

La composition selon l'invention présente un certain nombre de propriétés la rendant particulièrement apte à la fabrication de granules expansés et à la fabrication ultérieure, au départ de ces derniers, d'articles cellulaires. Elle présente également de bonnes propriétés mécaniques à haute température.

La valeur du MFI de la composition est généralement de 1 à 30 g/10 min.

Cette valeur est de préférence d'au moins 3 g/10 min, tout particulièrement d'au moins 5 g/10 min. Cette valeur est de préférence d'au plus *25* g/10 min, tout particulièrement d'au plus 15 g/10 min. Des valeurs de MFI trop basses rendent la composition difficile à mettre en oeuvre. Des valeurs de MFI trop élevées sont préjudiciables à une expansion homogène de la composition pour la fabrication des granules. Il est avantageux, pour le scellage des granules expansés entre eux et pour la qualité de l'expansion que le MFI de la composition soit la résultante - dans les fourchettes respectives mentionnées plus haut - de MFI beaucoup plus élevés pour le copolymère (B) que pour l'homopolymère (A).

La composition selon l'invention présente généralement un FlexMod de 600 à 2000 MPa. De préférence, ce FlexMod est au moins 800 MPa. Le plus souvent, ce FlexMod ne dépasse pas 1900 MPa.

Des compositions particulièrement préférées selon l'invention ont un FlexMod de 800 à 1900 MPa et un MFI de 3 à 25 g/10min.

Pour la fabrication de granules expansés, il est avantageux que la composition selon l'invention se présente sous la forme de prégranules de dimension moyenne de 0,5 à 5 mm, de préférence de 0,8 à 2 mm. Ces prégranules peuvent être obtenus par exemple en extrudant la composition.

Les compositions selon l'invention combinent
(1) une aptitude à être expansées de manière homogène afin de conférer une rigidité suffisamment élevée et une densité suffisamment basse à l'article cellulaire final,
(2) une plage de températures de moulage des granules expansés élargie, et
(3) de bonnes propriétés mécaniques à haute température.

La transformation de la composition selon l'invention en granules expansés et le moulage ultérieur de ces granules en articles cellulaires s'effectuent généralement de la manière conventionnelle décrite par exemple dans les documents EP-A-0317995 et *US-A-4626555,* dont le contenu est incorporé par référence dans la présente description.

Les prégranules sont dispersés à l'intérieur d'une enceinte fermée maintenue sous pression dans de l'eau en présence d'un agent d'expansion volatil et d'un agent dispersant. La suspension obtenue est chauffée à une température supérieure à la température de ramollissement de la composition et de préférence inférieure de 5 à 20°C à sa température de fusion cristalline. La pression à l'intérieur de l'enceinte fermée est généralement du même ordre de grandeur que la pression de vapeur, à la température considérée, de l'agent d'expansion volatil. La suspension est ensuite détendue, de préférence via un dispositif de décharge de l'enceinte fermée situé sous le niveau de la suspension. On obtient ainsi des granules expansés à base de la composition selon l'invention.

La quantité d'eau utilisée comme milieu de dispersion est généralement de 150 à 1000 parties en poids, de préférence de 200 à 500 parties en poids pour 100 parties en poids des particules de la composition selon l'invention.

L'agent d'expansion volatil est généralement choisi parmi les composés organiques dont la température d'ébullition dans des conditions normales est inférieure à 80°C. On préfère utiliser les hydrocarbures aliphatiques, les hydrocarbures aliphatiques halogénés et leurs mélanges. Des exemples d'agents d'expansion volatils convenant bien sont le propane, le butane, le pentane, l'hexane, l'heptane, le trichlorofluorométhane, le dichlorodifluorométhane, le dichlorotétrafluoroéthane, le chlorure de méthyle, le chlorure d'éthyle, le chlorure de méthylène, etc.

L'agent d'expansion volatil est généralement mis en oeuvre à raison de 10 à 50, de préférence de 15 à 30 parties en poids pour 100 parties en poids des particules de la composition selon l'invention.

L'agent de dispersion est généralement choisi parmi
- les agents de dispersion inorganiques tels que les oxydes d'aluminium et de titane, les carbonates de magnésium et de calcium, le phosphate de calcium, etc.;
- les colloïdes protecteurs polymériques hydrosolubles tels que l'alcool polyvinylique, la carboxyméthylcellulose, la N-polyvinylpyrrolidone, etc.;
- les tensioactifs anioniques tels que le dodécylbenzène sulfonate, les alkylsulfates de sodium, les dialkylsulfosuccinates de sodium, etc.

L'agent de dispersion est généralement mis en oeuvre à raison de 0,04 à 2 parties en poids pour 100 parties en poids des particules de la composition selon l'invention.

Les granules expansés ainsi obtenus présentent en général un poids spécifique apparent de 10 à 200 kg/m³, de préférence de 15 à 100 kg/m³, tout particulièrement de 20 à 60 kg/m³. Ils peuvent être soumis, simultanément ou ultérieurement au traitement ci-dessus, à un traitement complémentaire stabilisant leur porosité, surtout dans le cas où leur poids spécifique apparent est relativement faible. Ce traitement complémentaire consiste généralement à maintenir les granules expansés sous une atmosphère d'air ou de gaz inerte tel que l'azote éventuellement dilué avec l'agent d'expansion volatil sous pression de 0,5 à 10 bar pendant 5 à 100 heures.

Les granules expansés ainsi obtenus peuvent être enfin moulés sous la forme d'articles cellulaires tels que des feuilles ou des plaques isolantes, des matériaux de remplissage dans la construction, des articles d'emballage anti-chocs, des pièces pour l'industrie automobile, etc.

Ce moulage est généralement effectué en alimentant un moule, ayant la forme adéquate et permettant de laisser échapper les sous-produits gazeux, avec les granules expansés et en chauffant le moule au moyen de vapeur d'eau sous une pression de 1 à 5 bar provoquant ainsi l'expansion secondaire des granules expansés et leur agglomération entre eux. Après refroidissement du moule, on obtient l'article cellulaire souhaité.

Les exemples suivants illustrent l'invention.

### Exemple 1

On réalise un mélange comprenant 80 % en poids d'un homopolymère du propylène dont le MFI est 3,5 g/10 min et le FlexMod 1420 MPa et 20 % en poids d'un copolymère de propylène et de 1-butène contenant 15 % molaires de ce dernier et dont le MFI est 220 g/10 min et le FlexMod 600 MPa [le copolymère a été obtenu par dépolymérisation d'un précurseur de MFI 5 g/10 min, malaxé en fondu dans une extrudeuse avec 1,6 g/kg de 2,5-diméthyl-2,5-di-(t-butylperoxy)hexane (DHBP)].

Ce mélange, qui présente un MFI de 9,2 g/10 min et un FlexMod de 1250 MPa est granulé de manière à obtenir des particules de diamètre moyen de 1 mm.

Ces particules sont introduites dans une enceinte fermée contenant de l'eau, du dichlorodifluorométhane comme agent d'expansion volatil et un mélange de phosphate de calcium et de dodécylbenzènesulfonate de sodium comme agent de dispersion. Cette enceinte est maintenue à une température de 125°C sous une pression de 20 bar pendant environ 1 heure. La suspension aqueuse est ensuite prélevée par détente à pression atmosphérique, via une vanne située sous le niveau atteint par cette suspension à l'intérieur de l'enceinte, pour obtenir des granules expansés dont la densité apparente est 30 kg/m³.

Après séchage, ces granules sont compressés dans un moule équipé d'orifices d'évacuation de vapeur et chauffé par de la vapeur d'eau sous pression à environ 150°C pendant 4 minutes. L'article cellulaire obtenu est refroidi et démoulé à température ambiante.

### Exemple 2

On réalise un mélange comprenant 70 % en poids d'un homopolymère du propylène à haute cristallinité dont le MFI est 2,6 g/10 min le II 98 et le FlexMod 2300 MPa et 30 % en poids d'un copolymère de propylène et d'éthylène contenant 6,2 % molaires de ce dernier et dont le MFI est 150 g/10 min et le FlexMod 700 MPa (le copolymère a été obtenu par dépolymérisation d'un précurseur de MFI 4,6 g/10 min, malaxé en fondu dans une extrudeuse avec 1,5 g/kg de DHBP).

Ce mélange, qui présente un MFI de 9,6 g/10 min et un FlexMod de 1800 MPa est granulé de manière à obtenir des particules de diamètre moyen de 1 mm.

Ces particules sont transformées en granules expansés et ensuite en article cellulaire comme décrit à l'exemple 1.

## Revendications

1. Composition pour granules expansés comprenant, pour 100 parties en poids,
- de 60 à 90 parties en poids d'un homopolymère du propylène (A) ayant un indice de fluidité en fondu (MFI), mesuré selon la norme ASTM D 1238 (1986), sous une charge de 2,16 kg à 230°C et exprimé en g/10 min, de 0,1 à 20, et
- de 40 à 10 parties en poids d'un copolymère statistique du propylène (B) contenant de 3 à 20 % molaires d'éthylène et/ou d'une α-oléfine ayant de 4 à 6 atomes de carbone dont le MFI est de 25 à 3000 g/10 min.

2. Composition selon la revendication 1, ayant un module d'élasticité en flexion (FlexMod) de 600 à 2000 MPa et un MFI de 1 à 30 g/10 min.

3. Composition selon la revendication 1 ou 2 comprenant, pour 100 parties en poids,
- de 65 à 85 parties en poids d'un homopolymère du propylène (A) ayant un MFI de 1,5 à 5 g/10 min et un module d'élasticité en flexion de 1200 à 2450 MPa, et
- de 35 à 15 parties en poids d'un copolymère statistique du propylène (B) contenant de 3 à 20 % molaires d'éthylène et/ou d'une α-oléfine ayant de 4 à 6 atomes de carbone dont le MFI est de 80 à 300 g/10 min et le module d'élasticité en flexion est de 400 à 1000 MPa.

4. Composition selon l'une quelconque des revendications 1 à 3, ayant un module d'élasticité en flexion de 800 à 1900 MPa et un MFI de 3 à 25 g/10 min.

5. Composition selon la revendication 3, dans laquelle l'homopolymère du propylène a une isotacticité mesurée par RMN¹³C d'au moins 97 et le copolymère statistique (B) contient de 3,5 à 12 % molaires d'éthylène et a un MFI de 100 à 200 g/10 min.

6. Composition selon la revendication 3, dans laquelle le copolymère statistique (B) contient de 10 à 20 % molaires de 1-butène et a un MFI de 120 à 250 g/10 min.

7. Procédé d'obtention d'une composition pour granules expansés selon l'une quelconque des revendications 1 à 6, comprenant deux étapes de polymérisation successives dans lesquelles sont préparées respectivement de 60 à 90 parties en poids d'un homopolymère du propylène (A) ayant un MFI de 0,1 à 20 g/10 min et de 40 à 10 parties en poids d'un copolymère statistique du propylène (B) contenant de 3 à 20 % molaires d'éthylène et/ou d'une α-oléfine ayant de 4 à 6 atomes de carbone dont le MFI est de 25 à 3000 g/10 min.

8. Procédé d'obtention d'une composition pour granules expansés selon l'une quelconque des revendications 1 à 6, par mélange en fondu de 60 à 90 parties en poids d'un homopolymère du propylène (A) ayant un MFI de 0,1 à 20 g/10 min et de 40 à 10 parties en poids d'un copolymère statistique du propylène (B) contenant de 3 à 20 % molaires d'éthylène et/ou d'une α-oléfine ayant de 4 à 6 atomes de carbone dont le MFI est de 25 à 3000 g/10 min.

9. Utilisation d'une composition selon l'une quelconque des revendications 1 à 6 pour la fabrication de granules expansés.

10. Utilisation selon la revendication 9 pour la fabrication de granules expansés dont le poids spécifique apparent est de 10 à 200 kg/m³.

11. Articles cellulaires façonnés par moulage de granules expansés obtenus à partir d'une composition selon l'une quelconque des revendications 1 à 6.

## Patentansprüche

1. Zusammensetzung für aufgeschäumtes Granulat umfassend auf 100 Gewichtsteile
- 60 bis 90 Gewichtsteile eines Propylenhomopolymers (A) mit einem Schmelzindex (MFI), gemessen gemäß der Norm ASTM D 1238 (1986) unter einer Last von 2,16 kg bei 230°C und ausgedrückt in g/10 min, von 0,1 bis 20 und
- 40 bis 10 Gewichtsteile eines statistischen Propylencopolymers (B), das 3 bis 20 Mol-% Ethylen und/oder eines α-Olefins mit 4 bis 6 Kohlenstoffatomen enthält, dessen MFI 25 bis 3000 g/10 min beträgt.

2. Zusammensetzung gemäß Anspruch 1 mit einem Biegeelastizitätsmodul (FlexMod) von 600 bis 2000 MPa und einem MFI von 1 bis 30 g/10 min.

3. Zusammensetzung gemäß Anspruch 1 oder 2 umfassend auf 100 Gewichtsteile
- 65 bis 85 Gewichtsteile eines Propylenhomopolymers (A) mit einem MFI von 1,5 bis 5 g/10 min und einem Biegeelastizitätsmodul von 1200 bis 2450 MPa und
- 35 bis 15 Gewichtsteile eines statistischen Propylencopolymers (B), das 3 bis 20 Mol-% Ethylen und/oder eines α-Olefins mit 4 bis 6 Kohlenstoffatomen enthält, dessen MFI 80 bis 300 g/10 min beträgt und dessen Biegeelastizitätsmodul 400 bis 1000 MPa beträgt.

4. Zusammensetzung gemäß einem der Ansprüche 1 bis 3 mit einem Biegeelastizitätsmodul von 800 bis 1900 MPa und einem MFI von 3 bis 25 g/10 min.

5. Zusammensetzung gemäß Anspruch 3, worin das Propylenhomopolymer eine Isotaktizität, gemessen durch ¹³C-NMR, von wenigstens 97 besitzt und das statistische Copolymer (B) 3,5 bis 12 Mol-% Ethylen enthält und einen MFI von 100 bis 200 g/10 min besitzt.

6. Zusammensetzung gemäß Anspruch 3, worin das statistische Copolymer (B) 10 bis 20 Mol-% 1-Buten enthält und einen MFI von 120 bis 250 g/10 min besitzt.

7. Verfahren zum Erhalt einer Zusammensetzung für aufgeschäumtes Granulat gemäß einem der Ansprüche 1 bis 6 umfassend zwei aufeinanderfolgende Polymerisationsschritte, bei denen 60 bis 90 Gewichtsteile eines Propylenhomopolymers (A) mit einem MFI von 0,1 bis 20 g/10 min beziehungsweise 40 bis 10 Gewichtsteile eines statistischen Propylencopolymers (B), das 3 bis 20 Mol-% Ethylen und/oder eines α-Olefins mit 4 bis 6 Kohlenstoffatomen enthält, dessen MFI 25 bis 3000 g/10 min beträgt, hergestellt werden.

8. Verfahren zum Erhalt einer Zusammensetzung für aufgeschäumtes Granulat gemäß einem der Ansprüche 1 bis 6 durch Mischen in der Schmelze von 60 bis 90 Gewichtsteilen eines Propylenhomopolymers (A) mit einem MFI von 0,1 bis 20 g/10 min und 40 bis 10 Gewichtsteilen eines statistischen Propylencopolymers (B), das 3 bis 20 Mol-% Ethylen und/oder eines α-Olefins mit 4 bis 6 Kohlenstoffatomen enthält, dessen MFI 25 bis 3000 g/10 min beträgt.

9. Verwendung einer Zusammensetzung gemäß einem der Ansprüche 1 bis 6 für die Herstellung von aufgeschäumtem Granulat.

10. Verwendung gemäß Anspruch 9 für die Herstellung von aufgeschäumtem Granulat, dessen Schüttdichte 10 bis 200 kg/m³ beträgt.

11. Porige Gegenstände, die durch Formen von aufgeschäumtem Granulat, das aus einer Zusammensetzung gemäß einem der Ansprüche 1 bis 6 erhalten wird, hergestellt werden.

## Claims

1. Composition for expanded granules, which comprises, per 100 parts by weight,
- from 60 to 90 parts by weight of a propylene homopolymer (A) having a melt flow index (MFI), measured according to the ASTM D 1238 (1986) standard, under a load of 2.16 kg at 230°C and expressed in g/10 min, ranging from 0.1 to 20 and
- from 40 to 10 parts by weight of a propylene random copolymer (B) containing from 3 to 20 mol% of ethylene and/or of an α-olefin having from 4 to 6 carbon atoms, the MFI of which ranges from 25 to 3000 g/10 min.

2. Composition according to Claim 1, having a flexural modulus of elasticity (FlexMod) ranging from 600 to 2000 MPa and an MFI ranging from 1 to 30 g/10 min.

3. Composition according to Claim 1 or 2, comprising, per 100 parts by weight,
- from 65 to 85 parts by weight of a propylene homopolymer (A) having an MFI ranging from 1.5 to 5 g/10 min and a flexural modulus of elasticity ranging from 1200 to 2450 MPa and
- from 35 to 15 parts by weight of a propylene random copolymer (B) containing from 3 to 20 mol% of ethylene and/or of an α-olefin having from 4 to 6 carbon atoms, the MFI of which ranges from 80 to 300 g/10 min and the flexural modulus of elasticity ranges from 400 to 1000 MPa.

4. Composition according to any one of Claims 1 to 3, having a flexural modulus of elasticity ranging from 800 to 1900 MPa and an MFI ranging from 3 to 25 g/10 min.

5. Composition according to Claim 3, in which the propylene homopolymer has an isotacticity measured by ¹³C NMR of at least 97 and the random copolymer (B) contains from 3.5 to 12 mol% of ethylene and has an MFI ranging from 100 to 200 g/10 min.

6. Composition according to Claim 3, in which the random copolymer (B) contains from 10 to 20 mol% of 1-butene and has an MFI ranging from 120 to 250 g/10 min.

7. Process for obtaining a composition for expanded granules according to any one of Claims 1 to 6, which comprises two successive polymerization steps in which from 60 to 90 parts by weight of a propylene homopolymer (A) having an MFI ranging from 0.1 to 20 g/10 min and from 40 to 10 parts by weight of a propylene random copolymer (B) containing from 3 to 20 mol% of ethylene and/or of an α-olefin having from 4 to 6 carbon atoms, the MFI of which ranges from 25 to 3000 g/10 min, are prepared, respectively.

8. Process for obtaining a composition for expanded granules according to any one of Claims 1 to 6, by melt-mixing from 60 to 90 parts by weight of a propylene homopolymer (A) having an MFI ranging from 0.1 to 20 g/10 min and from 40 to 10 parts by weight of a propylene random copolymer (B) containing from 3 to 20 mol% of ethylene and/or of an α-olefin having from 4 to 6 carbon atoms, the MFI of which ranges from 25 to 3000 g/10 min.

9. Use of a composition according to any one of Claims 1 to 6 for the manufacture of expanded granules.

10. Use according to Claim 9 for the manufacture of expanded granules whose bulk density ranges from 10 to 200 kg/m³.

11. Cellular articles fashioned by moulding expanded granules obtained from a composition according to any one of Claims 1 to 6.
